# EUROPÄISCHE PATENTSCHRIFT

(11) **EP 3 602 727 B1**
(45) Veröffentlichungstag und Bekanntmachung des Hinweises auf die Patenterteilung: **02.06.2021**
(21) Anmeldenummer: 18718197.9
(22) Anmeldetag: 12.03.2018
(51) Int. Cl.: H02J 7/00, G05F 1/565, H02J 7/34, H05B 6/06, H02M 1/32

(54) **HAUSHALTSGERÄTEVORRICHTUNG UND VERFAHREN ZUM BETRIEB EINER HAUSHALTSGERÄTEVORRICHTUNG**
DOMESTIC APPLIANCE DEVICE AND METHOD FOR OPERATING A DOMESTIC APPLIANCE DEVICE
DISPOSITIF POUR APPAREIL MÉNAGER ET PROCÉDÉ POUR FAIRE FONCTIONNER UN DISPOSITIF POUR APPAREIL MÉNAGER

(30) Priorität: 30.03.2017 ES 201730508
(43) Veröffentlichungstag der Anmeldung: 05.02.2020
(73) Patentinhaber: BSH Hausgeräte GmbH, 81739 München (DE)
(72) Erfinder: ACEVEDO SIMON, Arturo, 50009 Zaragoza (ES); LAFUENTE URETA, Julio, 50018 Zaragoza (ES); MILLAN SERRANO, Ignacio, 50018 Zaragoza (ES); PUYAL PUENTE, Diego, 50014 Zaragoza (ES)
(86) Internationale Anmeldenummer: PCT/IB2018/051615
(87) Internationale Veröffentlichungsnummer: WO 2018/178786

(56) Entgegenhaltungen:
- US-A1- 2008 203 087
- US-A1- 2008 203 087
- US-B1- 6 204 612
- US-B1- 6 204 612

## Beschreibung

Die Erfindung betrifft eine Haushaltsgerätevorrichtung nach dem Oberbegriff des Anspruchs 1 und ein Verfahren zum Betrieb einer Haushaltsgerätevorrichtung nach Anspruch 11.

Aus dem Stand der Technik sind Gargeräte, insbesondere Induktionsgargeräte, bekannt, welche zumindest eine Hauptschalteinheit zur Versorgung von Induktionsheizelementen mit einer Versorgungsspannung durch Schaltung einer Hauptenergieversorgung, und eine Energiespeichereinheit, insbesondere ein Bus-Kondensator, welche insbesondere zu einer Signalglättung durch ein Laden der Energiespeichereinheit mit einem Ladepotential vorgesehen ist, aufweisen. In einem inaktiven Zustand der Hauptschalteinheit, beispielsweise vor einem Schaltbetrieb und/oder insbesondere in einem gepulsten Betrieb, wird die Energiespeichereinheit ohne eine angepasste Entladung nicht ausreichend entladen. Dadurch wird in jedem Ladevorgang für eine Aktivierung der Schalteinheit ein Spannungssprung erzeugt. Zudem kann ein Ladestrom ein, insbesondere im gepulsten Betrieb störendes, akustisches Geräusch erzeugen wodurch eine Schaltfunktionalität und folglich ein Bedienkomfort herabgesetzt sind
US 2008/203087 A1 offenbart eine Induktionsheizeinrichtung mit einem Brückengleichrichter, einem Zwischenkreiskondensator, einer Induktionsspule, welche gemeinsam mit einem Kondensator einen Resonanzschwingkreis ausbildet, mit einem Wechselrichter und mit einer Steuereinheit zu einer Ansteuerung des Wechselrichters. Der Wechselrichter wird gesteuert, damit der Zwischenkreiskondensator kontinuierlich entladen wird.

Die Aufgabe der Erfindung besteht insbesondere darin, eine gattungsgemäße Vorrichtung mit verbesserten Eigenschaften hinsichtlich einer Schaltfunktionalität bereitzustellen. Die Aufgabe wird erfindungsgemäß durch die Merkmale der Ansprüche 1 und 11 gelöst, während vorteilhafte Ausgestaltungen und Weiterbildungen der Erfindung den Unteransprüchen entnommen werden können.

Die Erfindung geht aus von einer Haushaltsgerätevorrichtung, insbesondere einer Gargerätevorrichtung, mit zumindest einer Entladeeinheit, welche dazu vorgesehen ist, in zumindest einem Entladebetriebszustand zumindest eine Energiespeichereinheit zumindest teilweise zu entladen.

Es wird vorgeschlagen, dass die Entladeeinheit in dem Entladebetriebszustand zu einer zumindest im Wesentlichen linearen Entladung der Energiespeichereinheit vorgesehen ist. Dadurch kann insbesondere eine Funktionalität einer, insbesondere einer als Induktionsgargerät ausgebildeten, Gargerätevorrichtung hinsichtlich eines Schaltvorgangs in einem gepulsten Heizbetrieb verbessert werden. Ferner kann insbesondere eine verbesserte, insbesondere gleichförmige, Entladung der Energiespeichereinheit erreicht werden, womit vorteilhaft, insbesondere während eines Schaltvorgangs für einen gepulsten Betrieb einer Haushaltsgerätevorrichtung, eine Geräuscherzeugung reduziert wird. Dadurch kann ein Bedienkomfort erhöht, zudem Herstellungskosten und/oder ein Herstellungsaufwand vorteilhaft reduziert werden.

Unter einer "Haushaltsgerätevorrichtung" soll in diesem Zusammenhang insbesondere zumindest ein Teil, insbesondere eine Unterbaugruppe, eines Haushaltsgeräts, insbesondere eines Gargeräts, vorzugsweise eines Kochfelds und besonders bevorzugt eines Induktionskochfelds, verstanden werden. Insbesondere kann die Haushaltsgerätevorrichtung auch das gesamte Haushaltsgerät, insbesondere das gesamte Gargerät, vorzugsweise das gesamte Kochfeld und besonders bevorzugt das gesamte Induktionskochfeld, umfassen. Insbesondere kann die Haushaltsgerätevorrichtung ferner eine Steuereinheit, einen Wechselrichter und/oder zumindest ein Heizelement, insbesondere zumindest einen Induktor, umfassen. Unter einer "Energiespeichereinheit" soll in diesem Zusammenhang insbesondere eine Einheit verstanden werden, die dazu vorgesehen ist, eine, insbesondere elektrische, Energie, zur Erzeugung einer elektrischen Spannung und/oder eines elektrischen Stroms zur Belegung von Hauptschaltkontakten, insbesondere zum Schalten, einer Hauptschalteinheit, insbesondere zumindest temporär, zu speichern. Insbesondere ist die Energiespeichereinheit von zumindest einer elektrischen Kapazität, insbesondere zumindest einem Kondensator, gebildet. Unter einer "Entladeeinheit" soll insbesondere eine Einheit verstanden werden, welche insbesondere elektrisch mit dem Energiespeicherelement verbunden ist und insbesondere in einem Entladebetriebszustand dazu vorgesehen ist, insbesondere eine von dem Energiespeicherelement gespeicherte, insbesondere elektrische, Energie, insbesondere ein an dem Energiespeicherelement anliegendes Ladepotential, zumindest teilweise, bevorzugt vollständig zu entladen und insbesondere mittels eines, mittels einer Hauptschalteinheit schaltbaren, Flusses eines Entladestroms von der Energiespeichereinheit aufzunehmen und bevorzugt an zumindest einen mit der elektrischen Hauptschalteinheit elektrisch verbundenen Verbraucher, insbesondere ein Induktionsheizelement, weiterzuleiten. Unter einer "Hauptschalteinheit" soll insbesondere eine Einheit mit zumindest einem als Leistungsschaltelement ausgebildeten Schaltelement verstanden werden, welche dazu vorgesehen ist, in zumindest einem Schaltzustand einen mittleren Strom von zumindest 0,5 A, insbesondere zumindest 1 A, vorteilhaft zumindest 4 A, vorzugsweise zumindest 10 A, insbesondere periodisch, zu schalten. Insbesondere ist das Leistungsschaltelement dazu geeignet, den mittleren Strom über eine Dauer von mehr als 10 Sekunden, insbesondere mehr als 1 Minute, vorteilhaft mehr als 10 Minuten, vorzugsweise defektfrei, zu tragen. Vorteilhaft ist das Leistungsschaltelement als Halbleiterbauelement, insbesondere als Transistor, vorteilhaft als IGBT, alternativ als MOSFET, und/oder als Transistorgruppe ausgebildet. Insbesondere ist das Leistungsschaltelement dazu vorgesehen, zumindest ein Leistungsbauteil, insbesondere zumindest einen Induktor, mit der Hauptenergieversorgung zu verbinden. Insbesondere ist das Leistungsschaltelement dazu vorgesehen, einen Strom des Induktors, der dazu vorgesehen ist, in dem Betriebsmodus eine Leistung von zumindest 100 W, insbesondere zumindest 500 W, vorteilhaft zumindest 1000 W, vorzugsweise zumindest 2000 W, von der Hauptenergieversorgung zu beziehen, mit einer Frequenz von zumindest 1 kHz, insbesondere zumindest 10 kHz, vorteilhaft zumindest 50 kHz, zu schalten. Unter einem "Schaltelement" soll insbesondere eine Komponente verstanden werden, die dazu vorgesehen ist, in Abhängigkeit von zumindest einem Signal, insbesondere einer an Hauptschaltkontakten anliegenden elektrischen Spannung, zumindest eine elektrisch leitfähige Verbindung zwischen zumindest zwei Leistungskontakten herzustellen und/oder zu trennen. Unter einer "Entladekenngröße" soll insbesondere eine Kenngröße, insbesondere eines zu entladenden Bauteils, insbesondere der Energiespeichereinheit, verstanden werden, welche insbesondere mit der Entladung der Energiespeichereinheit korreliert ist. Insbesondere kann eine Entladekenngröße mit einem Entladestrom, mit einer Entladespannung und/oder einem Ladepotential korreliert sein und kann insbesondere einen Betrag aufweisen, welcher vorteilhaft proportional zu dem Entladestrom, der Entladespannung und/oder dem Ladepotential ausgebildet ist.

Unter einem "Entladebetriebszustand" soll insbesondere ein Betriebszustand, insbesondere der Entladeeinheit und der Energiespeichereinheit, verstanden werden, in welchem die Entladeeinheit zumindest ein Ladepotential der Energiespeichereinheit, insbesondere mittels eines Entladestroms, verringert. Insbesondere ist ein Entladebetriebszustand mittels eines Schaltelements, insbesondere mittels eines Hauptschaltelements der Hauptschalteinheit schaltbar. Unter "zumindest teilweise entladen" soll insbesondere verstanden werden, dass eine Entladeeinheit ein an einem eine elektrische Energie speichernden Objekt, insbesondere eines Kondensators mit einer Energiespeichereinheit, anliegendes Ladepotential mittels eines Flusses eines Entladestroms während eines Entladevorgangs, insbesondere in dem Entladebetriebszustand, derart verringert, dass das elektrische Potential am Ende des Entladevorgang einen Betrag aufweist, der höchstens 50 %, bevorzugt höchstens 40 %, vorteilhaft höchstens 30 %, besonders bevorzugt höchstens 20 %, und besonders vorteilhaft höchstens 10 %, eines Betrags des Potentials zu Beginn des Entladevorgangs entspricht. Insbesondere ist die Energiespeichereinheit am Ende des Entladevorgangs vollständig entladen, wobei das Potential zum Ende des Entladevorgangs 0 % des Betrages des Potentials zu Beginn des Entladevorgangs entspricht. Unter einer "zumindest im Wesentlichen linearen Entladung" soll insbesondere ein Vorgang in dem Entladebetriebszustand der Gargerätevorrichtung verstanden werden, in welchem die Energiespeichereinheit eine zumindest temporär gespeicherte Energie, insbesondere das Ladepotential, über eine Entladezeit, mittels eines im Wesentlichen konstanten Entladestroms an eine Entladeeinheit abgibt, wobei das Ladepotential insbesondere eine im Wesentlichen konstante Abnahme aufweist, sodass ein Signal, welches über die Entladezeit proportional zum Betrag des Ladepotentials der Energiespeichereinheit ist und eine negative, insbesondere konstante Steigung aufweist. Bevorzugt erfolgt die Entladung vollständig, insbesondere bis das Potential der Energiespeichereinheit 0 Volt beträgt. Insbesondere ist ein Betrag des Entladestroms in dem Entladebetriebszustand zumindest im Wesentlichen konstant. Unter "zumindest im Wesentlichen konstant", soll in diesem Zusammenhang insbesondere verstanden werden, dass ein Betrag des Entladestroms um höchstens 15 %, vorzugsweise um höchstens 10 % und besonders bevorzugt um höchstens 5 % von einem über die Entladezeit gemittelten Betrag des Entladestroms abweicht. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Zudem wird vorgeschlagen, dass die Entladeeinheit zumindest eine mit der Energiespeichereinheit in Reihe geschaltete Hauptschalteinheit und zumindest eine der Hauptschalteinheit zugeordnete Anpassungseinheit aufweist, welche dazu vorgesehen ist, in dem Entladebetriebszustand wenigstens eine Entladekenngröße zu beeinflussen. Unter einer "Anpassungseinheit" soll insbesondere eine, vorteilhaft mit der Hauptschalteinheit, insbesondere elektrisch, verbundene Einheit verstanden werden, welche dazu vorgesehen ist, eine Entladekenngröße, insbesondere die Entladekenngröße der Energiespeichereinheit, zu beeinflussen. Insbesondere ist die Anpassungseinheit als ein elektrischer Schaltkreis ausgebildet und elektrisch insbesondere mit der Hauptschalteinheit und/oder insbesondere mit der Energiespeichereinheit verbunden. Insbesondere ist die Anpassungseinheit dazu vorgesehen die Entladekenngröße, insbesondere einen Betrag der Entladekenngröße, insbesondere zumindest im Wesentlichen konstant zu halten. Darunter dass ein Objekt, insbesondere die Anpassungseinheit, dazu vorgesehen ist, eine Kenngröße, insbesondere die Entladekenngröße, "zu beeinflussen", soll in diesem Zusammenhang insbesondere verstanden werden, dass die Entladekenngröße bei einer Abwesenheit und/oder Inaktivität des Objekts, insbesondere der Anpassungseinheit einen anderen Zustand, einen anderen Verlauf, und/oder insbesondere eine andere Quantität aufweist und/oder annimmt als bei einer Anwesenheit und/oder Aktivität des Objekts, insbesondere der Anpassungseinheit. Insbesondere ist die Anpassungseinheit dazu vorgesehen, eine Veränderung der Entladekenngröße zumindest weitegehend zu reduzieren. Dadurch kann eine besonders effiziente Entladung der Energiespeichereinheit erreicht werden, wodurch eine Funktionalität der Gargerätevorrichtung und vorteilhaft ein Bedienkomfort verbessert werden kann.

Weiterhin wird vorgeschlagen, dass die Entladekenngröße mit einem Entladestrom korreliert ist. Insbesondere ist die Entladekenngröße proportional zu dem Entladestrom der Energiespeichereinheit, welcher insbesondere mittels eines Strommesselements, insbesondere einer Messdiode und/oder eines elektrischen Widerstands, vorteilhaft einfach gemessen werden kann. Insbesondere korreliert der Entladestrom mit dem Potential der Energiespeichereinheit. Dadurch kann insbesondere eine verbesserte Steuerung und vorteilhaft eine vereinfachte Regelung der Entladeeinheit erreicht werden.

In einer bevorzugten Ausgestaltung der Erfindung wird vorgeschlagen, dass die Anpassungseinheit zwischen einem Steueranschluss und einem Leistungsanschluss der Hauptschalteinheit angeordnet ist. Insbesondere weist die Hauptschalteinheit zumindest zwei Leistungsanschlüsse, insbesondere einen ersten Leistungsanschluss und einen zweiten Leistungsanschluss, auf, wobei der Steueranschluss dazu vorgesehen ist, insbesondere zu einer Steuerung der Hauptschalteinheit, in Abhängigkeit eines an dem Steueranschluss anliegenden Potentials, eine leitende Verbindung zwischen dem ersten Leistungsanschluss und dem zweiten Leistungsanschluss, insbesondere temporär auszubilden, insbesondere zu schalten. Insbesondere ist die Anpassungseinheit mit einem Steueranschluss und einem Leistungsanschluss der Hauptschalteinheit elektrisch verbunden. Insbesondere ist die Anpassungseinheit zu einer Steuerung der Hauptschalteinheit mit dem Steueranschluss und zur Messung des Entladeparameters mit einem Leistungsanschluss verbunden. Dadurch kann eine bauraumsparende Anpassungseinheit und eine verbesserte Steuerung einer Entladung der Energiespeichereinheit erreicht werden.

Insbesondere kann eine Anpassungseinheit mittels einer zugeschalteten und/oder externen Kontroll- und/oder Regeleinheit gesteuert und eine Anpassung geregelt werden. In der bevorzugten Ausgestaltung der Erfindung wird jedoch vorgeschlagen, dass die Anpassungseinheit selbst-steuernd ausgebildet ist. Hierdurch kann insbesondere eine vorteilhaft einfache, kostengünstige und sichere Steuerung erreicht werden. Darunter, dass die zumindest eine Anpassungseinheit "selbst-steuernd" ausgebildet ist, soll insbesondere verstanden werden, dass die Anpassungseinheit in zumindest einem Betriebszustand, insbesondere einem Entladebetriebszustand, ihren Zustand automatisch und selbsttätig, insbesondere abhängig von einer, insbesondere momentanen, Entladekenngröße, insbesondere einem Entladestrom und/oder einer Entladespannung, der zumindest einen Hauptschalteinheit ändert. Insbesondere ist die zumindest eine Anpassungseinheit frei von einer, insbesondere direkten, Verbindung zu einer externen Steuereinheit.

Zu einer besonders effizienten Anpassung der Entladekenngröße und einer vorteilhaft verbesserten Entladung einer Energiespeichereinheit wird vorgeschlagen, dass die Anpassungseinheit zumindest eine Anpassungsschalteinheit umfasst. Insbesondere umfasst die Anpassungsschalteinheit zumindest ein als MOSFET ausgebildetes Anpassungsschaltelement, wodurch insbesondere eine steuerbare und vorteilhaft verbesserte Beeinflussung der Entladekenngröße erreicht werden kann.

Ferner wird zu einer besonders effizienten Anpassung der Entladekenngröße vorgeschlagen, dass ein Steueranschluss der Anpassungsschalteinheit mit einem Leitungsanschluss der Hauptschalteinheit verbunden ist, insbesondere mittelbar über zumindest einen Widerstand. Insbesondere kann eine Beeinflussung der Entladekenngröße, insbesondere des Entladestroms mittels der Anpassungsschalteinheit, insbesondere der Anpassungseinheit, mittels eines gemessenen Steuersignals, insbesondere der Entladekenngröße, am Steueranschluss der Anpassungsschalteinheit gesteuert werden. Dadurch kann eine verbesserte und insbesondere schnellere Beeinflussung der Entladekenngröße erreicht werden.

Zudem wird vorgeschlagen, dass die Hauptschalteinheit als Wechselrichterschalter ausgebildet ist, wobei die Hauptschalteinheit eine Schaltzeit von höchstens 10 ms aufweist. Der Wechselrichter ist vorzugsweise dazu vorgesehen, einen oszillierenden elektrischen Strom, vorzugsweise mit einer Frequenz von zumindest 1 kHz, insbesondere von wenigstens 10 kHz und vorteilhaft von mindestens 20 kHz, insbesondere zu einem Betrieb des zumindest einen Induktionsheizelements, bereitzustellen und/oder zu erzeugen. Vorteilhaft umfasst der Wechselrichter die Hauptschalteinheit, insbesondere das Leistungsschaltelement, welches zu einer Schaltung der Entladekenngröße vorgesehen ist. Unter einer "Schaltzeit" soll hier insbesondere eine Zeitdauer einer, insbesondere mittels einer Schalttreibereinheit gesteuerten, Aktivierung, insbesondere Schalten, der als Wechselrichters ausgebildeten Hauptschalteinheit verstanden werden, welche insbesondere in einem gepulsten Betrieb der Hausgerätevorrichtung, insbesondere der Induktionsheizeinheit, einer Länge eines Pulses der elektrischen Energie zur Versorgung der Induktionsheizeinheit entspricht. Insbesondere kann eine Schaltzeit von bevorzugt weniger als 10 ms, vorteilhaft weniger als 5 ms und bevorzugt weniger als 3 ms erreicht werden. Dadurch können insbesondere kurze Schaltzeiten erreicht werden und eine vorteilhaft verbesserte Entladung der Entladeeinheit erreicht werden, wodurch aufgrund von Geräuschreduktion vorteilhaft ein Bedienkomfort gesteigert werden kann.

Um vorteilhaft einen Herstellungsprozess zu verbessern und folglich insbesondere Herstellungskosten zu reduzieren, wird in einer bevorzugten Ausgestaltung der Erfindung vorgeschlagen, dass die Entladeeinheit zumindest teilweise in SMD-Bauweise, insbesondere Surface-Mounting-Device Bauweise, insbesondere auf einer PCB-Platine, ausgebildet ist. Insbesondere kann die Hauptschalteinheit vorteilhaft als Surface-Mounting D2Pak-MOSFETsowie zumindest ein Messelement der Messeinheit, insbesondere der oben eingeführten Messeinheit vorteilhaft als einzelner SMD-Widerstand ausgebildet sein. Insbesondere können alle weiteren Bauteile der Entladeeinheit und vorteilhaft zusätzlich die Energiespeichereinheit in SMD-Bauweise ausgebildet werden.

Zudem wird ein Verfahren zum Betrieb einer Haushaltsgerätevorrichtung vorgeschlagen, insbesondere mit zumindest einer Entladeeinheit, welche dazu vorgesehen ist, in zumindest einem Entladebetriebszustand zumindest eine Energiespeichereinheit zumindest teilweise zu entladen, wobei in zumindest einem Entladebetriebszustand eine Energiespeichereinheit zumindest im Wesentlichen linear entladen wird. Dadurch kann insbesondere eine Funktionalität einer, insbesondere einer als Induktionsgargerät ausgebildete, Gargerätevorrichtung hinsichtlich eines Schaltvorgangs verbessert werden. Ferner kann insbesondere eine verbesserte, insbesondere gleichförmige, Entladung der Energiespeichereinheit erreicht werden, womit vorteilhaft, insbesondere während eines Einschaltvorgangs einer Haushaltsgerätevorrichtung, eine Geräuscherzeugung reduziert wird. Dadurch kann ein Bedienkomfort erhöht, zudem Herstellungskosten und ein Herstellungsaufwand vorteilhaft reduziert werden.

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein als Kochfeld ausgebildetes Haushaltsgerät mit einer Haushaltsgerätevorrichtung in einer Draufsicht,
- Fig. 2: ein Schaltdiagramm der Haushaltsgerätevorrichtung und
- Fig. 3: ein schematisches Schaubild eines Signals eines Ladepotentials und eines Signals eines Entladestroms einer Energiespeichereinheit der Haushaltsgerätevorrichtung.

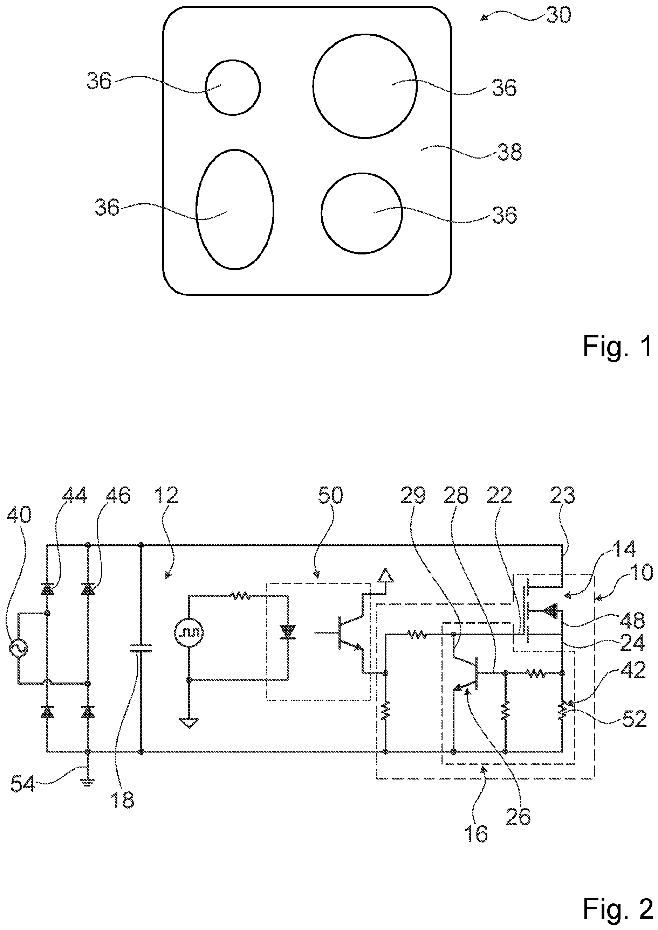

Figur 1 zeigt ein als Induktionskochfeld ausgebildetes Haushaltsgerät 30 mit Induktoren 36, die unter einer Kochfeldplatte 38 angeordnet sind. Das Haushaltsgerät 30 weist eine als Gargerätevorrichtung ausgebildete Haushaltsgerätevorrichtung auf.

Figur 2 zeigt ein Schaltdiagramm der Haushaltsgerätevorrichtung. Die Haushaltsgerätevorrichtung weist einen Anschluss an eine Hauptenergieversorgung 40 auf. Die Hauptenergieversorgung 40 ist zur Bereitstellung einer Wechselspannung vorgesehen. Die Hauptenergieversorgung 40 ist zur Bereitstellung einer Versorgungsspannung vorgesehen. Eine Amplitude der Versorgungsspannung beträgt maximal 390 Volt. Im vorliegenden Fall beträgt eine Amplitude der Versorgungsspannung 280 Volt.

Die Haushaltsgerätevorrichtung weist eine Energiespeichereinheit 12 auf. Ein erster Anschluss der Energiespeichereinheit 12 ist über eine erste Sperrdiode 44 mit einem ersten Anschluss der Hauptenergieversorgung 40 verbunden. Der erste Anschluss der Energiespeichereinheit 12 ist über eine zweite Sperrdiode 46 mit einem zweiten Anschluss der Hauptenergieversorgung 40 verbunden. Ein zweiter Anschluss der Energiespeichereinheit 12 ist mit einem Bezugspotential 54 der Haushaltsgerätevorrichtung verbunden. Das Bezugspotential 54 ist als Massenpotential ausgebildet. Die Hauptenergieversorgung 40 ist dazu vorgesehen, die Energiespeichereinheit 12 über den ersten Anschluss der Energiespeichereinheit 12 zu laden. Zwischen dem ersten Anschluss und dem zweiten Anschluss der Energiespeichereinheit 12 liegt ein Ladepotential 37 an.

Die Energiespeichereinheit 12 weist zumindest ein Energiespeicherelement 18 auf. Das Energiespeicherelement 18 ist als ein Kondensator ausgebildet. Das Energiespeicherelement 18 weist eine Kapazität zwischen 1 µF und 1 mF auf. Im vorliegenden Fall weist die Energiespeicherelement 18 eine Kapazität von 6,6 µF auf. Die Sperrdioden 44, 46 sind dazu vorgesehen eine Richtung eines Flusses eines Ladestroms aus der Hauptenergieversorgung 40 vorzugeben. Die Sperrdioden 44, 46 sind dazu vorgesehen einen Ladestrom aus der Hauptenergieversorgung 40 zu begrenzen. Die Sperrdioden 44, 46 sind dazu vorgesehen eine Richtung eines Flusses eines Entladestroms 20 zu der Hauptenergieversorgung 40 zu verhindern. Die Sperrdioden 44, 46 verhindern eine Entladung des Energiespeicherelements 18 über die Hauptenergieversorgung 40. Das Energiespeicherelement 18 ist als ein Buskondensator ausgebildet.

Die Haushaltsgerätevorrichtung weist eine Entladeeinheit 10 auf. Die Entladeeinheit 10 ist elektrisch zwischen dem Bezugspotential 54 und einem Potential der Wechselspannung der Hauptenergieversorgung 40 angeordnet. Die Entladeeinheit 10 ist in einem Entladebetriebszustand dazu vorgesehen, die Energiespeichereinheit 12 zu entladen. Die Entladeeinheit 10 ist in einem Entladebetriebszustand dazu vorgesehen, die Energiespeichereinheit 12 vollständig zu entladen. Eine vollständige Entladung der Energiespeichereinheit 12 verhindert bei einem Einschaltvorgang und insbesondere in einem gepulsten Betrieb der Haushaltsgerätevorrichtung, dass eine weitere Ladung in einem Einschaltvorgang und insbesondere beim Einschalten eines Puls einen Spannungssprung erzeugt, wobei ein Ladestrom bei jedem Schalten eines Pulses ein akustisches Geräusch erzeugt. Die Entladeeinheit 10 ist vollständig in Surface-Mounting-Device Bauweise ausgebildet. Die Entladeeinheit 10 ist auf einer Leiterplatte angeordnet, insbesondere gelötet. Zudem ist denkbar, die Haushaltsgerätevorrichtung vollständig in Surface-Mounting-Device Bauweise zu fertigen.

Die Entladeeinheit 10 weist zumindest eine Hauptschalteinheit 14 auf. Die Hauptschalteinheit 14 ist elektrisch mit der Hauptenergieversorgung 40 verbunden. Die Hauptschalteinheit 14 ist dazu vorgesehen, die Energiespeichereinheit 12 zu entladen. Die Hauptschalteinheit 14 ist in Reihe geschaltet mit der Energiespeichereinheit 12. Die Hauptschalteinheit 14 ist als Wechselrichterschalter ausgebildet. Eine Schaltzeit der Hauptschalteinheit 14 beträgt höchstens 10 ms. Die Schaltzeit der Hauptschalteinheit 14 beträgt im vorliegenden Fall 2,7 ms. Die Hauptschalteinheit 14 umfasst zumindest ein Leistungsschaltelement 48.

Das Leistungsschaltelement 48 ist als MOSFET ausgebildet. Das Leistungsschaltelement 48 ist als Surface-Mounting Bauteil ausgebildet. Das Leistungsschaltelement 48 ist als Halbleiterbauteil, insbesondere als D2PAK ausgebildet. Das Leistungsschaltelement 48 weist einen ersten Leistungsanschluss 23 auf. Der erste Leistungsanschluss 23 ist mit dem ersten Anschluss der Energiespeichereinheit 12 elektrisch verbunden. Das Leistungsschaltelement 48 weist einen zweiten Leistungsanschluss 24 auf. Das Leistungsschaltelement 48 weist einen Steueranschluss 22 auf. Der Steueranschluss 22 ist dazu vorgesehen, in einem Betriebszustand in Abhängigkeit von einer an den Steueranschluss 22 anliegende Spannung eine elektrische Verbindung zwischen dem ersten Leistungsanschluss 23 und dem zweiten Leistungsanschluss 24 auszubilden. Der Steueranschluss 22 ist dazu vorgesehen, das Leistungsschaltelement 48 zu schalten.

Der Steueranschluss 22 ist elektrisch mit einer Schalttreibereinheit 50 verbunden. Die Schalttreibereinheit 50 ist als Optokoppler ausgebildet. Die Schalttreibereinheit 50 stellt eine elektrische Spannung zur Schaltung der Hauptschalteinheit 14 bereit. Die Schalttreibereinheit 50 stellt ein Steuerpotential zur Schaltung der Hauptschalteinheit 14 bereit. Die Schalttreibereinheit 50 stellt ein periodisches Signal zur Schaltung der Hauptschalteinheit 14 bereit. Die Schalttreibereinheit 50 liefert eine Wechselspannung für den Steueranschluss 22 der Hauptschalteinheit 14. Liegt ein elektrisches Potential, insbesondere ein Steuerpotential an dem Steueranschluss 22 an, sind der erste Leistungsanschluss 23 und der zweite Leistungsanschluss 24 elektrisch verbunden. Die Schalttreibereinheit 50 ist dazu vorgesehen, die Hauptschalteinheit 14 periodisch zu schalten.

In dem Betriebszustand, in welchem der erste Leistungsanschluss 23 und der zweite Leistungsanschluss 24 elektrisch verbunden sind, fließt der Entladestrom 20 aus der Energiespeichereinheit 12 über den ersten Anschluss der Energiespeichereinheit 12, durch den ersten Leistungsanschluss 23, durch die Hauptschalteinheit 14 auf den zweiten Leistungsanschluss 24. In diesem Betriebszustand ist die Hauptschalteinheit 14 dazu vorgesehen, die Energiespeichereinheit 12 zu entladen. In diesem Betriebszustand ist die Entladeeinheit 10 dazu vorgesehen, die Energiespeichereinheit 12 zu entladen. Der Betriebszustand ist als Entladebetriebszustand ausgebildet. In dem Entladebetriebszustand nimmt das Ladepotential 37 bei dem durch die Hauptschalteinheit 14 fließenden Entladestrom 20 über eine Entladespannung ab. Die Entladeeinheit 10 ist in dem Entladebetriebszustand zu einer linearen Entladung der Energiespeichereinheit 12 vorgesehen.

Die Entladeeinheit 10 weist eine Anpassungseinheit 16 auf. Die Anpassungseinheit 16 ist der Hauptschalteinheit 14 zugeordnet. Die Anpassungseinheit 16 ist zwischen dem Steueranschluss 22 und dem Leistungsanschluss 24 der Hauptschalteinheit 14 angeordnet. Die Anpassungseinheit 16 ist elektrisch mit dem Steueranschluss 22 der Hauptschalteinheit 14 verbunden. Die Anpassungseinheit 16 ist elektrisch mit dem zweiten Leistungsanschluss 24 der Hauptschalteinheit 14 verbunden. Die Anpassungseinheit 16 ist zudem mit dem Bezugspotential 54, insbesondere mit dem Massenpotential verbunden. Die Anpassungseinheit 16 ist in dem Entladebetriebszustand dazu vorgesehen, eine Entladekenngröße zu beeinflussen. Die Anpassungseinheit 16 ist in dem Entladebetriebszustand dazu vorgesehen, den Entladestrom 20 zu beeinflussen.

Die Anpassungseinheit 16 weist zumindest eine Anpassungsschalteinheit 26 auf. Die Anpassungsschalteinheit 26 weist zumindest ein als MOSFET ausgebildetes Schaltelement auf. Die Anpassungsschalteinheit 26 weist einen Steueranschluss 28 auf. Der Steueranschluss 28 ist mit dem zweiten Leistungsanschluss 24 der Hauptschalteinheit 14 elektrisch verbunden. Der Steueranschluss 28 ist mit dem zweiten Leistungsanschluss 24 des Leistungsschaltelements 48 elektrisch verbunden. Die Anpassungsschalteinheit 26 weist einen ersten Leistungsanschluss 29 auf. Der erste Leistungsanschluss 29 ist mit dem Steueranschluss 22 der Hauptschalteinheit 14 verbunden. Der erste Leistungsanschluss 29 ist mit dem Steueranschluss 22 des Leistungsschaltelements 48 elektrisch verbunden.

Die Anpassungseinheit 16 weist zudem eine Steuereinheit 42 auf. Die Steuereinheit 42 weist einen elektrischen Widerstand 52 auf. Der elektrische Widerstand weist einen Betrag zwischen 0,1 Ω und 10 Ω auf. Im vorliegenden Fall beträgt der elektrische Widerstand der Steuereinheit 42 1,5 Ω Ein erster Kontakt der Steuereinheit 42 ist mit dem zweiten Leistungsanschluss 24 der Hauptschalteinheit 14 elektrisch verbunden. Der erste Kontakt der Steuereinheit 42 ist mit dem Steueranschluss 28 der Anpassungsschalteinheit 26 verbunden. Ein zweiter Kontakt der Steuereinheit 42 ist mit dem Bezugspotential 54 verbunden.

Die Anpassungseinheit 16 ist selbststeuernd ausgebildet. In dem Entladebetriebszustand ist die Hauptschalteinheit 14 geschaltet. Der Entladestrom 20 fließt aus der Energiespeichereinheit 12 über die Hauptschalteinheit 14 in die Steuereinheit 42. Das Ladepotential 37 der Energiespeichereinheit 12 nimmt proportional zu dem Entladestrom 20 ab. An dem elektrischen Widerstand 52 der Steuereinheit 42 fällt die Entladespannung ab. Die Entladespannung liegt an dem Steueranschluss 28 der Anpassungsschalteinheit 26 an. Der erste Leistungsanschluss 29 der Anpassungsschalteinheit 26 ist mit einem zweiten Leistungsanschluss der Anpassungsschalteinheit 26 elektrisch verbunden. Ein elektrisches Signal, insbesondere eine elektrische Wechselspannung aus der Schalttreibereinheit 50 fällt teilweise über die Anpassungseinheit 16 auf das Bezugspotential 54 ab. Die elektrische Spannung, insbesondere die Steuerspannung am Steueranschluss 22 des Hauptschaltelements ist dadurch verändert. Die elektrische Verbindung, insbesondere ein elektrischer Kontakt der Leistungsanschlüsse 23, 24 der Hauptschalteinheit 14 ist verändert, sodass der Entladestrom 20 beeinflusst wird. In der Steuereinheit 42 fällt eine geringere Entladespannung ab, womit die Steuerspannung an dem Steueranschluss 22 der Hauptschalteinheit 14 verändert ist und ein veränderter Entladestrom 20 in die Steuereinheit 42 fließt.

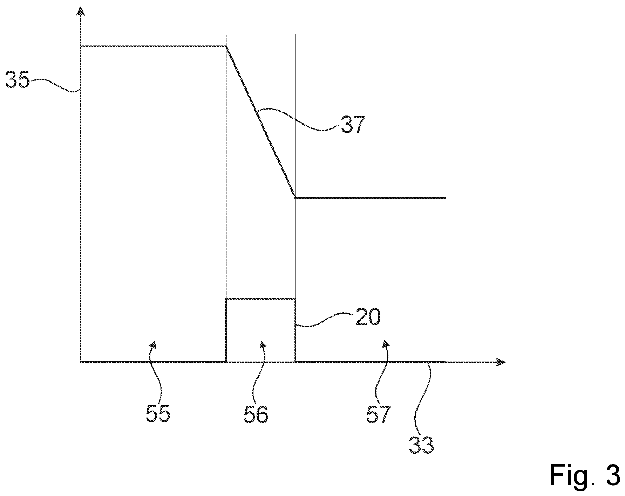

In Figur 3 sind Signale des Entladestroms 20 und des Ladepotentials 37 einer Entladung der Energiespeichereinheit 12 in einer schematischen Darstellung gezeigt. Die schematische Darstellung zeigt eine Ordinatenachse 35, welche als Größenachse dargestellt ist. Die Ordinatenachse 35 zeigt zwei Ordinatenbereiche, insbesondere einen unteren Ordinatenbereich, welcher ein Signal des Entladestroms 20 zeigt, und einen oberen Ordinatenbereich, welcher ein Signal des Ladepotentials 37 zeigt. Zudem zeigt die Darstellung eine Abszissenachse 33, welche als Zeitachse dargestellt ist. Die Abszissenachse 33 lässt sich in drei Bereiche 55, 56, 57 einteilen, insbesondere einen ersten Bereich 55, welcher einen geladenen Zustand der Energiespeichereinheit 12 zeigt, einen zweiten Bereich 56, welcher den Entladebetriebszustand zeigt, und einen dritten Bereich 57, welcher einen entladenen Zustand der Energiespeichereinheit 12 zeigt.

Das Ladepotential 37 ist in dem ersten Bereich 55 konstant und beträgt höchstens 390 V. Der Entladestrom 20 liegt in dem ersten Bereich 55 bei 0 A.

In dem Entladebetriebszustand beeinflusst die Entladeeinheit 10 die Entladung derart, dass in dem zweiten Bereich 56 das Ladepotential 37 linear abnimmt. In dem zweiten Bereich 56 ist die Steigung des Ladepotentials 37 negativ ausgebildet. In dem zweiten Bereich 56 weist die Steigung des Ladepotentials 37 einen Betrag von höchstens 144kV/µs auf. In dem zweiten Bereich 56 ist der Entladestrom 20 konstant und beträgt im vorliegenden Fall 0,953 A. Eine Temperatur der Hauptschalteinheit 14 ist in dem zweiten Bereich 56 nahezu konstant, insbesondere beträgt eine Erhöhung der Temperatur im Entladebetriebszustand höchsten 10 %.

In dem dritten Bereich 57 ist das Ladepotential 37 konstant und beträgt 0 Volt. In dem dritten Bereich 57 ist die Energiespeichereinheit 12 vollständig entladen. In dem dritten Bereich 57 beträgt der Entladestrom 20 demnach 0 A.

### Bezugszeichen

- 10: Entladeeinheit
- 12: Energiespeichereinheit
- 14: Hauptschalteinheit
- 16: Anpassungseinheit
- 18: Energiespeicherelement
- 20: Entladestrom
- 22: Steueranschluss
- 23: Leistungsanschluss
- 24: Leistungsanschluss
- 26: Anpassungsschalteinheit
- 28: Steueranschluss
- 29: Leistungsanschluss
- 30: Haushaltsgerät
- 33: Abszissenachse
- 35: Ordinatenachse
- 36: Induktor
- 37: Ladepotential
- 38: Kochfeldplatte
- 40: Hauptenergieversorgung
- 42: Steuereinheit
- 44: Sperrdiode
- 46: Sperrdiode
- 48: Leistungsschaltelement
- 50: Schalttreibereinheit
- 52: Elektrischer Widerstand
- 54: Bezugspotential
- 55: Bereich
- 56: Bereich
- 57: Bereich

## Patentansprüche

1. Haushaltsgerätevorrichtung, insbesondere Gargerätevorrichtung, mit einer Steuereinheit, mit einem Wechselrichter, mit zumindest einem Heizelement und mit zumindest einer Entladeeinheit (10), welche dazu vorgesehen ist, in zumindest einem Entladebetriebszustand zumindest eine Energiespeichereinheit (12) zumindest teilweise zu entladen, **dadurch gekennzeichnet, dass** die Entladeeinheit (10) in dem Entladebetriebszustand zu einer zumindest im Wesentlichen linearen Entladung der Energiespeichereinheit (12) vorgesehen ist, wobei ein Betrag eines Entladestroms (20) in dem Entladebetriebszustand zumindest im Wesentlichen konstant ist.

2. Haushaltsgerätevorrichtung nach Anspruch 1, **dadurch gekennzeichnet, dass** die Entladeeinheit (10) zumindest eine mit der Energiespeichereinheit (12) in Reihe geschaltete Hauptschalteinheit (14) und zumindest eine der Hauptschalteinheit (14) zugeordnete Anpassungseinheit (16) aufweist, welche dazu vorgesehen ist, in dem Entladebetriebszustand wenigstens eine Entladekenngröße zu beeinflussen.

3. Haushaltsgerätevorrichtung nach Anspruch 2, **dadurch gekennzeichnet, dass** die Entladekenngröße mit einem Entladestrom (20) korreliert ist.

4. Haushaltsgerätevorrichtung nach Anspruch 2 oder 3, **dadurch gekennzeichnet, dass** die Anpassungseinheit (16) zwischen einem Steueranschluss (22) und einem Leistungsanschluss (24) der Hauptschalteinheit (14) angeordnet ist.

5. Haushaltsgerätevorrichtung nach einem der Ansprüche 2 bis 4, **dadurch gekennzeichnet, dass** die Anpassungseinheit (16) selbst-steuernd ausgebildet ist.

6. Haushaltsgerätevorrichtung nach einem der Ansprüche 2 bis 5, **dadurch gekennzeichnet, dass** die Anpassungseinheit (16) zumindest eine Anpassungsschalteinheit (26) umfasst.

7. Haushaltsgerätevorrichtung nach Anspruch 6, **dadurch gekennzeichnet, dass** die Anpassungsschalteinheit (26) einen Steueranschluss (28) aufweist, welcher mit einem Leistungsanschluss (24) der Hauptschalteinheit (14) verbunden ist.

8. Haushaltsgerätevorrichtung nach einem der Ansprüche 2 bis 7, **dadurch gekennzeichnet, dass** die Hauptschalteinheit (14) als Wechselrichterschalter ausgebildet ist, wobei die Hauptschalteinheit (14) eine Schaltzeit von höchstens 10 ms aufweist.

9. Haushaltsgerätevorrichtung nach einem der vorhergehenden Ansprüche,
**dadurch gekennzeichnet, dass** die Entladeeinheit (10) zumindest teilweise in SMD-Bauweise ausgebildet ist.

10. Haushaltsgerät (30), insbesondere Gargerät, mit zumindest einer Haushaltsgerätevorrichtung nach einem der vorhergehenden Ansprüche.

11. Verfahren zum Betrieb einer Haushaltsgerätevorrichtung, insbesondere nach einem der Ansprüche 1 bis 9, wobei in zumindest einem Entladebetriebszustand eine Energiespeichereinheit (12) zumindest im Wesentlichen linear, mittels eines zumindest im Wesentlichen konstanten Entladestroms (20), entladen wird.

## Claims

1. Household appliance device, in particular cooking appliance device, with a control unit, with an inverter, with at least one heating element and with at least one discharge unit (10), which is provided, in at least one discharging operating mode, to discharge at least one energy storage unit (12) at least partially, **characterised in that** in the discharging operating mode the discharge unit (10) is provided for an at least essentially linear discharging of the energy storage unit (12), wherein a value of the discharge current (20) is at least essentially constant in the discharging operating mode.

2. Household appliance device according to claim 1, **characterised in that** the discharge unit (10) has at least one main switching unit (14) connected in series with the energy storage unit (12) and at least one adjustment unit (16) assigned to the main switching unit (14), which is provided to influence at least one discharge parameter in the discharging operating mode.

3. Household appliance device according to claim 2, **characterised in that** the discharge parameter is correlated with a discharge current (20).

4. Household appliance device according to claim 2 or 3, **characterised in that** the adjustment unit (16) is arranged between a control connection (22) and a power connection (24) of the main switching unit (14).

5. Household appliance device according to one of claims 2 to 4, **characterised in that** the adjustment unit (16) is embodied to be self-controlling.

6. Household appliance device according to one of claims 2 to 5, **characterised in that** the adjustment unit (16) comprises at least one adjustment switching unit (26).

7. Household appliance device according to claim 6, **characterised in that** the adjustment switching unit (26) has a control connection (28), which is connected with a power connection (24) of the main switching unit (14).

8. Household appliance device according to one of claims 2 to 7, **characterised in that** the main switching unit (14) is embodied as an inverter switch, wherein the main switching unit (14) has a switching time of at most 10 ms.

9. Household appliance device according to one of the preceding claims, **characterised in that** the discharge unit (10) is embodied at least partially using SMD design.

10. Household appliance (30), in particular cooking appliance, with at least one household appliance device according to one of the preceding claims.

11. Method for operating a household appliance device, in particular according to one of claims 1 to 9, wherein in at least one discharging operating mode, an energy storage unit (12) is at least essentially linearly discharged by means of an at least essentially constant discharge current (20).

## Revendications

1. Dispositif pour appareil ménager, en particulier dispositif pour appareil de cuisson, comprenant une unité de commande, un onduleur, au moins un élément chauffant et au moins une unité de décharge (10), qui est conçue pour décharger au moins en partie au moins une unité d'accumulation d'énergie (12) dans au moins un état fonctionnel de décharge,
**caractérisé en ce que** l'unité de décharge (10) est conçue pour une décharge au moins essentiellement linéaire de l'unité d'accumulation d'énergie (12) dans l'état fonctionnel de décharge, dans lequel une valeur d'un courant de décharge (20) est au moins essentiellement constante dans l'état fonctionnel de décharge.

2. Dispositif pour appareil ménager selon la revendication 1, **caractérisé en ce que** l'unité de décharge (10) comprend au moins une unité de commutation principale (14) connectée en série à l'unité d'accumulation d'énergie (12) et au moins une unité d'adaptation (16) associée à l'unité de commutation principale (14), qui est conçue pour influencer au moins un paramètre de décharge dans l'état fonctionnel de décharge.

3. Dispositif pour appareil ménager selon la revendication 2, **caractérisé en ce que** le paramètre de décharge est corrélé à un courant de décharge (20).

4. Dispositif pour appareil ménager selon la revendication 2 ou 3, **caractérisé en ce que** l'unité d'adaptation (16) est disposée entre une connexion de commande (22) et une connexion de puissance (24) de l'unité de commutation principale (14).

5. Dispositif pour appareil ménager selon l'une des revendications 2 à 4, **caractérisé en ce que** l'unité d'adaptation (16) est réalisée de façon auto-contrôlée.

6. Dispositif pour appareil ménager selon l'une des revendications 2 à 5, **caractérisé en ce que** l'unité d'adaptation (16) comprend au moins une unité de commutation d'adaptation (26).

7. Dispositif pour appareil ménager selon la revendication 6, **caractérisé en ce que** l'unité de commutation d'adaptation (26) comprend une connexion de commande (28), qui est reliée à une connexion de puissance (24) de l'unité de commutation principale (14).

8. Dispositif pour appareil ménager selon l'une des revendications 2 à 7, **caractérisé en ce que** l'unité de commutation principale (14) est configurée sous forme d'un commutateur d'onduleur, dans lequel l'unité de commutation principale (14) a un temps de commutation maximal de 10 ms.

9. Dispositif pour appareil ménager selon l'une des revendications précédentes, **caractérisé en ce que** l'unité de décharge (10) est réalisée au moins en partie dans une conception de SMD.

10. Appareil ménager (30), en particulier appareil de cuisson, comprenant au moins un dispositif pour appareil ménager selon l'une des revendications précédentes.

11. Procédé de fonctionnement d'un dispositif pour appareil ménager, en particulier selon l'une des revendications 1 à 9, dans lequel, dans au moins un état fonctionnel de décharge, une unité d'accumulation d'énergie (12) est déchargée de façon au moins essentiellement linéaire, au moyen d'un courant de décharge (20) au moins essentiellement constant.
